# EUROPEAN PATENT SPECIFICATION

(11) **EP 1 950 237 B1**
(45) Date of publication and mention of the grant of the patent: **23.12.2009**
(21) Application number: 07001846.0
(22) Date of filing: 29.01.2007
(51) Int. Cl.: C08G 63/49, C08G 63/00

(54) **Process for making modifed alkyd resins**
Verfahren zur Herstellung von modifizierten Alkydharzen
Procédé pour la préparation des résines alkyd modifiées

(43) Date of publication of application: 30.07.2008
(73) Proprietor: Cognis IP Management GmbH, 40589 Düsseldorf (DE)
(72) Inventor: Bigorra Llosas, Joaquin, Dr., 08201 Sabadell (ES); Llaurado, Luis, 08440 Cardedeu (Barcelona) (ES); Graupera, Elisabet, 08203 Sabadell (Barcelona) (ES); Raya, Javier, 08620 Sant Vicenc dels Horts (ES); Höfer, Rainer, Dr., 40477 Düsseldorf (DE)
(74) Representative: Fabry, Bernd

(56) References cited:
- EP-A2- 0 685 543
- WO-A-00/75243
- WO-A-02/34843
- WO-A-2005/052070
- MUIZEBELT W J ET AL: "Crosslink mechanisms of high-solids alkyd resins in the presence of reactive diluents" PROGRESS IN ORGANIC COATINGS, vol. 40, no. 1-4, December 2000 (2000-12), pages 121-130, XP002984198 ISSN: 0300-9440

## Description

### Field of the invention

The present invention is related to the area of paints and lacquers and refers to an improved process for making modified alkyd resins with reduced VOC content and the use of unsaturated dialkyl amides in such process.

### Background of the invention

Alkyd resins are the largest group of synthetic resins used in the coating industry. They are polyester resins which include residues of polybasic, usually dibasic acid(s) - and in particular dibasic acid anhydrides like maleic anhydride (MAH) or phthalic acid anhydride (PAH) - and polyhydroxy, usually tri- or higher hydroxy alcohols, further including monobasic fatty acid residues. The following figure shows a typical structure of a modified alkyd resin monomer:

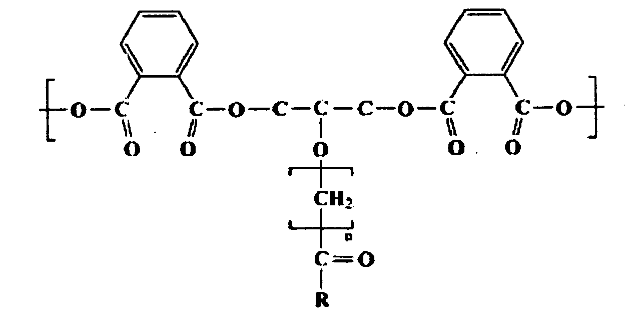

The monobasic residues may be derived (directly or indirectly) from oils (fatty acid triglycerides), and alkyd resins are also referred to as oil modified polyester resins. Alkyds used in surface coatings are generally curable usually either from residual carboxyl and hydroxyl functionality or by unsaturation (often multiple unsaturation) in the monobasic fatty acid residues. Some alkyds are used as plasticisers, e.g. for other alkyd resins, and these materials are not usually curable. Alkyd resins may include other residues and/or additives to provide specific in the presence of organic solvents, which is characterised in that unsaturated dialkyl amides are used as solvents.

Surprisingly it has been observed that unsaturated dialkyl amides can replace conventional organic solvents in alkyd resin compositions either totally or in part in order to reduce viscosity while maintaining the active matter content or maintaining the viscosity while increasing the active matter. In addition, dialkyl amides react with the double bonds of the unsaturated oils or fatty acid residues in the resin forming a curable film, which improves the film properties and reduces the amount of volatile organic solvent. The unsaturated dialkyl amides also represent excellent solvents for all typical dryers or polymerisation catalysts.

### Polyhydric alcohols

Suitable polyhydric alcohols (component a) forming the backbone of the alkyd resins can be chosen from the group consisting of glycerol, ethylene glycol, diethylene glycol, propylene glycol, dipropylene glycol, trimethylol propane, pentaerythrit and their mixtures. Typically, TMP, glycerol and pentaerythrol are the preferred species for manufacturing the alkyd resins according to the present invention.

### Poly- and Dicarboxylic acid (anhydride)s

Although also poly- or dicarboxylic acids (component b) can be used for conducting the polycondensation with the polyhydric alcohols, usually their anhydrides are taken due to their higher reactivity. Typical and therefore preferred examples are maleic acid anhydride, phthalic acid anhydride and their mixtures.

### Unsaturated oils and unsaturated fatty acids

The presence of double bonds in the monobasic unsaturated fatty acids or triglycerides leads to the air-curing properties of these materials. Usually modified alkyd resins are classified by the term "oil length". A "medium oil length" means that the amount of monobasic fatty acids is less than 40 %, while "high oil length" means a resin comprising 40 to 70 % fatty acids. (Preferably, the present invention relates to the manufacture of resins showing a high oil length.)

Unsaturated oils or unsaturated fatty acids are used for replacing the dicarboxylic acids in part in order to obtain modified alkyd resins with improved film forming properties when used for making paints and lacquers. Typical examples for suitable oils (component c1) are rape seed oil, sunflower oil, safflower oil, soy oil, castor oil, olive oil, line oil, tall oil and their mixtures. Of course, also synthetic triglycerides showing similar or the same spectra of fatty acids can be taken. Usually it is preferred to use the fatty acids themselves instead of the triglycerides. Suitable examples can be selected from the group comprising palmoleic acid, oleic acid, elaidinic acid, linolic acid, linoleic acid, conjugated linoleic acid (CLA), ricinoleic acid, gadoleic acid, behenic acid and their mixtures including those commercially available fatty acid mixtures comprising also saturated fatty acids, given that the amount of unsaturated fatty acids is at least 30 % b.w. The ratio between dicarboxylic acid (anhydride)s on the one hand and the unsaturated oils or fatty acids on the other strongly depends on the properties one wishes to obtain. It is therefore recommended to vary the ratio in a broad range, for example between 10:90 and 90:10 mol-% - calculated on the amount of carboxylic acid groups in the molecules.

### Unsaturated dialkyl amides

Usually, said unsaturated dialkyl amides forming the reactive solvents according to the present invention follow general formula (I)

**R¹CO-NR²R³** **(I)**

in which R¹CO represents an acyl radical having 16 to 22 carbon atoms and 1 to 3 double bonds, and R² and R³ independently stand for alkyl or hydroxy alkyl groups having 1 to 4 carbon atoms. Typical examples are dialkyl amides based on the same unsaturated fatty acids as listed in the section above. However, preferred dialkyl amides are derived from oleic acid, sunflower acid, soy acid or tall oil fatty acid. In a second preferred embodiment of the present invention, the unsaturated dialkyl amides represent dimethyl amides. Finally, the most preferred reactive solvents are dimethyl amides derived from oleic acid, or tall oil.

### Alkyd resin compositions

Since the process for making alkyd resins has been representing the state of the art for decades, it is well known to the skilled person how to conduct the polymerisation reaction; reference is once again made to the documents cited above.

As explained in the beginning, it possible to replace the conventional organic solvents either totally or in part, depending on the viscosity and the active matter which is desired. For example, in one embodiment of the present invention, a 50:50 mixture of dialkyl amides and organic solvents is used. Usually, the unsaturated dialkyl amides are used in such quantities that the active matter content in the final products is at least 60, and preferably 70 to 85 % b.w. Suitable solvents to be used in mixtures with the unsaturated dialkyl amides are, for example, toluene, xylene, white spirit and the like. The weight ratios between the dialkyl amides and the organic solvents can be 90:10 to 10:90, preferably 40:60 to 60:40.

### Industrial application

Another embodiment of the present invention is directed to the use of unsaturated dialkyl amides as solvents for making alkyd resin formulations in general and lacquers and paints in particular.

Finally, the invention also encompasses curing concentrates, comprising
(i) Unsaturated dialkyl amides and
(ii) Curing catalysts selected from the group consisting of soaps of cobalt, zinc, zircon, calcium, barium and the like used in alkyd resins.

Preferably, components (a) and (b) can be used in ratios by weight of 50:50 to 99.5:0.5. The concentrates may be added either during or after polymerisation.

The present invention is illustrated by the following working examples without being limited to them.

### Examples

### Comparative Example C1, Example 1

In an alkyd resin composition (oil length 60 %), 50 % of the organic solvent (white spirit, Exxal^{®} D40) was replaced by a dimethyl amide based on tall oil fatty acid. The viscosities of the compositions were determined at 25 °C according to Brookfield (RVT, spindle 6, 10 rpm). The results are shown in Table 1:

**Table 1**

| **Viscosity of alkyd resin compositions** | | |
|---|---|---|
| **Composition** | **C1** | **1** |
| Resin [% b.w.] | 72 | 72 |
| Exxal^{®} D 40 [% b.w.] | 28 | 14 |
| DMA based on tall oil [% b.w.] | - | 14 |
| Viscosity [mPa*s] | 54,600 | 23,000 |

As one can see, the replacement of 50 % of the organic solvent by the dimethyl amide leads to a significant reduction in viscosity, which opens the door to an increase in active matter content of the final composition. Since the unsaturation of the dimethyl amide chain reacts with the double bonds of the alkyd resin during the drying process, also the content of VOC is significantly reduced.

### Comparative Example C2, Examples 2 and 3

In an alkyd resin composition (oil length 70 %), the organic solvent (white spirit, Exxal^{®} D40) was fully replaced by two dimethylamides. The viscosities of the compositions were determined as explained above. The results are shown in Table 2:

**Table 2**

| **Viscosity of alkyd resin compositions** | | | |
|---|---|---|---|
| **Composition** | **C2** | **2** | **3** |
| Resin [% b.w.] | 83.8 | 83.8 | 83,8 |
| Exxal^{®} D 40 [% b.w.] | 16.2 | - | - |
| DMA based on tall oil [% b.w.] | - | 16.2 | - |
| DMA based on oleic acid [% b.w.] | - | - | 16.2 |
| Viscosity [mPa*s] | 63,300 | 43,000 | 52,000 |

The examples demonstrate that even a full replacement of the organic solvent leads to a significant reduction in viscosity.

### Comparative Example C3, Examples 4-8

In a commercial alkyd resin composition (oil length 70 %), the organic solvent (white spirit, Exxal® D40) was partially replaced by two dimethyl amides. The viscosities of the compositions were determined as explained above. The results are shown in Table 3:

**Table 3**

| **Viscosity of alkyd resin compositions** | | | | | | |
|---|---|---|---|---|---|---|
| **Composition** | **C3** | **4** | **5** | **6** | **7** | **8** |
| Resin [% b.w.] | 72,7 | 72,7 | 72,7 | 72,7 | 72,7 | 72,7 |
| Exxal^{®} D 40 [% b.w.] | 27.3 | 20.5 | 14.5 | 9.4 | 20.5 | 14.5 |
| DMA based on tall oil [% b.w.] | - | 6.8 | 12.7 | 17.9 | | |
| DMA based on oleic acid [% b.w.] | | | | | 6.8 | 12.7 |
| Viscosity [mPa*s] | 4,730 | 3,230 | 2,800 | 2,690 | 3,140 | 2,760 |

### Comparative Example C4, Example 9

Two blends of alkyd resins comprising 72.7 % b.w. Resin 4527 and 27.3 % of a DMA based on stearic acid and a DMA based on oleic acid were subjected to curing in the presence of Metalest^{®} 270 EHD, a standard curing catalyst for alkyd resins comprising soaps of cobalt, calcium and zircon. The Persoz hardness was determined after 1 h and 10 days, respectively. The results are shown in Table 4:

**Table 4**

| **Persoz hardness after curing [s]** | | | | | |
|---|---|---|---|---|---|
| **Example** | **Solvent** | **Concentration of curing catalyst [% b.w.]** | | | |
| | | **0.02 Co** | **0.04 Co** | **0.06 Co** | **0.1 Co** |
| | | **0,5 Zr** | **0,5 Zr** | **0,5 Zr** | **0,5 Zr** |
| C4 | DMA based on Fatty acid of tall oil | 10h: 39 | 10h: 45 | 10h: 47 | 10h: 51 |
| | | | | | |
| | | 5drays: 60 | 5days:75 | 5days:85 | 5days:98 |
| 9 | DMA based on Stearic acid | | 10h: 47 | | |
| | | | 5d : 28 | | |
| | | | 28 days: 62 | | |

Hardness of alkyds with unsaturated DMA shows an increase when an increasing amount of catalyst is added and over time.

The examples show that the saturated DMA does not act as a reactive solvent. Hardness is in principle high due to a lower plastification effect against unsaturated DMA, but over time the first effect, surprisingly, is a lower hardness, and after some more time an increase in hardness takes place due to the cure of alkyd resin.

## Claims

1. A process for the production of modified alkyd resins by polymerisation of
(a) Polyhydric alcohols,
(b) Polycarboxylic acids, dicarboxylic acids or their anhydrides, and
(c) Unsaturated oils or unsaturated fatty acids,
in the presence of organic solvents, **characterised in that** unsaturated dialkyl amides are used as solvents.

2. Process according to Claim 1, **characterised in that** polyhydric alcohols (component a) are used which are chosen from the group consisting of TMP glycerol, ethylene glycol, diethylene glycol, propylene glycol, dipropylene glycol, trimethylol propane, pentaerythrit and their mixtures.

3. Process according to Claim 1 and/or 2, **characterised in that** dicarboxylic acid anhydrides (component b) are used which are chosen from the group consisting of maleic acid anhydride and phthalic acid anhydride and their mixtures.

4. Process according to any of Claims 1 to 3, **characterised in that** unsaturated oils (component c1) are used which are chosen from the group consisting of rape seed oil, sunflower oil, safflower oil, soy oil, castor oil, olive oil, line oil, tall oil and their mixtures.

5. Process according to any of Claims 1 to 4, **characterised in that** unsaturated fatty acids (component c2) are used which are chosen from the group consisting of palmoleic acid, oleic acid, elaidinic acid, linolic acid, linoleic acid, conjugated linoleic acid (CLA), ricinoleic acid, gadoleic acid, behenic acid and their mixtures including those commercially available fatty acid mixtures comprising also saturated fatty acids, given that the amount of unsaturated fatty acids is at least 30 % b.w.

6. Process according to any of Claims 1 to 5, **characterised in that** unsaturated dialkyl amides are used which follow general formula (I)
**R¹CO-NR²R³** **(I)**
in which R¹CO represents an acyl radical having 16 to 22 carbon atoms and 1 to 3 double bonds, and R² and R³ independently stand for alkyl or hydroxy alkyl groups having 1 to 4 carbon atoms.

7. Process according to any of Claims 1 to 6, **characterised in that** unsaturated dialkyl amides are used which are derived from oleic acid, sunflower acid, soy acid or tall oil fatty acid.

8. Process according to any of Claims 1 to 7, **characterised in that** unsaturated dimethyl amides are used.

9. Process according to any of Claims 1 to 8, **characterised in that** the unsaturated dialkyl amides are used in such quantities that the active matter content in the final products is at least 60 % b.w.

10. Use of unsaturated dimethyl amides as solvents in a polymerisation process for the production of modified alkyd resins.

11. Curing concentrates, comprising
(i) Unsaturated dimethyl amides and
(ii) Curing catalysts selected from the group consisting of soaps of cobalt, zinc, zircon, calcium or barium.

12. Concentrates according to Claim 11, **characterised in that** they comprise components (i) and (ii) in ratios by weight of 50:50 to 99.5:0.5.

## Patentansprüche

1. Verfahren zur Herstellung modifizierter Alkydharze durch Polymerisation von
(a) mehrwertigen Alkoholen,
(b) Polycarbonsäuren, Dicarbonsäuren oder deren Anhydride, und
(c) ungesättigten Ölen oder ungesättigten Fettsäuren,
in Gegenwart organischer Lösemittel, **dadurch gekennzeichnet, dass** man als Lösemittel ungesättigte Dialkylamide einsetzt.

2. Verfahren nach Anspruch 1, **dadurch gekennzeichnet, dass** mehrwertige Alkohole (Komponente a) eingesetzt werden, die ausgewählt sind aus der Gruppe, die gebildet wird von Glycerin, Ethylenglykol, Diethylenglykol, Propylenglykol, Dipropylenglykol, Trimethylolpropan, Pentaerythrit und deren Gemischen.

3. Verfahren nach den Ansprüchen 1 und/oder 2, **dadurch gekennzeichnet, dass** Dicarbonsäureanhydride (Komponente b) eingesetzt werden, die ausgewählt sind aus der Gruppe, die gebildet wird von Maleinsäureanhydrid, Phthalsäureanhydrid und deren Gemischen.

4. Verfahren nach mindestens einem der Ansprüche 1 bis 3, **dadurch gekennzeichnet, dass** ungesättigte Öle (Komponente c1) eingesetzt werden, die ausgewählt sind aus der Gruppe, die gebildet wird von Rapsöl, Sonnenblumenöl, Diestelöl, Sojaöl, Ricinusöl, Olivenöl, Leinöl, Tallöl und deren Gemischen.

5. Verfahren nach mindestens einem der Ansprüche 1 bis 4, **dadurch gekennzeichnet, dass** ungesättigte Fettsäuren (Komponente c2) eingesetzt werden, die ausgewählt sind aus der Gruppe, die gebildet wird von Palmoleinsäure, Ölsäure, Elaidinsäure, Linolsäure, Linolensäure, konjugierter Linolensäure (CLA), Ricinolsäure, Gadoleinsäure, Behensäure und deren Gemischen, einschließlich kommerziell erhältlicher Fettsäuregemischen, die auch gesättigte Fettsäuren mit der Maßgabe enthalten können, dass der Gehalt an ungesättigten Fettsäuren in den Mischungen mindestens 30 Gew.-% beträgt.

6. Verfahren nach mindestens einem der Ansprüche 1 bis 5, **dadurch gekennzeichnet, dass** ungesättigte Dialkylamide eingesetzt werden, die der allgemeinen Formel (I) folgen,
R¹CO-NR²R³ (I)
In der R¹CO für ein Acylradikal mit 16 bis 22 Kohlenstoffatomen und 1 bis 3 Doppelbindungen steht und R² und R³ unabhängig voneinander Alkyl- oder Hydroxyalkylgruppen mit 1 bis 4 Kohlenstoffatomen bedeuten.

7. Verfahren nach mindestens einem der Ansprüche 1 bis 6, **dadurch gekennzeichnet, dass** ungesättigte Dialkylamide eingesetzt werden, die sich von Ölsäure, Sonnenblumenfettsäure, Sojafettsäure oder Tallölfettsäure ableiten.

8. Verfahren nach mindestens einem der Ansprüche 1 bis 7, **dadurch gekennzeichnet, dass** ungesättigte Dimethylamide eingesetzt werden.

9. Verfahren nach mindestens einem der Ansprüche 1 bis 8, **dadurch gekennzeichnet, dass** die ungesättigten Dialkylamide in solchen Mengen eingesetzt werden, dass der Aktivsubstanzgehalt in der Endzusammensetzung mindestens 60 Gew.-% beträgt.

10. Verwendung von ungesättigten Dimethylamiden als Lösemittel in einem Polymerisationsverfahren zur Herstellung modifizierter Alkydharze.

11. Härterkonzentrate, enthaltend
(i) ungesättigte Dimethylamide und
(ii) Härtungskatalysatoren ausgewählt aus der Gruppe, die gebildet wird von Seifen des Kobalts, Zinks, Zirkons, Calciums oder Bariums.

12. Konzentrate nach Anspruch 11, **dadurch gekennzeichnet, dass** sie die die Komponenten (i) und (ii) im Gewichtsverhältnis 50:50 bis 99,5:0,5 enthalten.

## Revendications

1. Procédé de fabrication de résines alkydes modifiées par polymérisation de
(a) des alcools polyhydriques,
(b) des acides polycarboxyliques, des acides dicarboxyliques ou leurs anhydrides, et
(c) des huiles insaturées ou des acides gras insaturés,
en présence de solvants organiques, **caractérisé en ce que** des dialkylamides insaturés sont utilisés en tant que solvants.

2. Procédé selon la revendication 1, **caractérisé en ce que** les alcools polyhydriques (composant a) utilisés sont choisis dans le groupe constitué du TMP glycérol, de l'éthylène glycol, du diéthylène glycol, du propylène glycol, du dipropylène glycol, du triméthylol propane, de la pentaérythrite et leurs mélanges.

3. Procédé selon la revendication 1 et/ou 2, **caractérisé en ce que** les anhydrides d'acide dicarboxylique (composant b) utilisés sont choisis dans le groupe constitué de l'anhydride de l'acide maléique et de l'anhydride de l'acide phtalique et leurs mélanges.

4. Procédé selon l'une quelconque des revendications 1 à 3, **caractérisé en ce que** les huiles insaturées (composant c1) utilisées sont choisies dans le groupe constitué de l'huile de colza, l'huile de tournesol, l'huile de carthame, l'huile de soja, l'huile de ricin, l'huile d'olive, l'huile de lin, le tallöl et leurs mélanges.

5. Procédé selon l'une quelconque des revendications 1 à 4, **caractérisé en ce que** les acides gras insaturés (composant c2) utilisés sont choisis dans le groupe constitué de l'acide palmoléique, l'acide oléique, l'acide élaidinique, l'acide linolique, l'acide linoléique, l'acide linoléique conjugué (CLA), l'acide ricinoléique, l'acide gadoléique, l'acide béhénique et leurs mélanges, y compris les mélanges d'acides gras disponibles dans le commerce comprenant également des acides gras saturés, à condition que la quantité d'acides gras insaturés soit d'au moins 30 % en poids.

6. Procédé selon l'une quelconque des revendications 1 à 5, **caractérisé en ce que** les dialkylamides insaturés utilisés suivent la formule générale (I)
R¹CO-NR²R³ (I)
dans laquelle R¹CO représente un radical acyle contenant 16 à 22 atomes de carbone et 1 à 3 doubles liaisons, et R² et R³ représentent indépendamment des groupes alkyle ou hydroxy alkyle contenant 1 à 4 atomes de carbone.

7. Procédé selon l'une quelconque des revendications 1 à 6, **caractérisé en ce que** les dialkylamides insaturés utilisés dérivent de l'acide oléique, de l'acide de tournesol, de l'acide de soja ou de l'acide gras de tallöl.

8. Procédé selon l'une quelconque des revendications 1 à 7, **caractérisé en ce que** des diméthylamides insaturés sont utilisés.

9. Procédé selon l'une quelconque des revendications 1 à 8, **caractérisé en ce que** les dialkylamides insaturés sont utilisés en quantités telles que la teneur en substance active des produits finaux est d'au moins 60 % en poids.

10. Utilisation de diméthylamides insaturés en tant que solvants dans un procédé de polymérisation pour la fabrication de résines alkydes modifiées.

11. Concentrés de durcissement, comprenant
(i) des diméthylamides insaturés et
(ii) des catalyseurs de durcissement choisis dans le groupe constitué des savons de cobalt, zinc, zirconium, calcium ou baryum.

12. Concentrés selon la revendication 11, **caractérisés en ce qu'**ils comprennent les composants (i) et (ii) en rapports en poids de 50:50 à 99,5:0,5.
